# EUROPEAN PATENT APPLICATION

(11) **EP 3 163 509 A1**
(43) Date of publication of application: **03.05.2017**
(21) Application number: 16195235.3
(22) Date of filing: 24.10.2016
(51) Int. Cl.: G06K 9/34

(54) **METHOD FOR REGION EXTRACTION, METHOD FOR MODEL TRAINING, AND DEVICES THEREOF**

(30) Priority: 30.10.2015 CN 201510727932
(71) Applicant: Xiaomi Inc., Beijing 100085 (CN)
(72) Inventor: LONG, Fei, Haidian District, Beijing 100085 (CN); ZHANG, Tao, Haidian District, Beijing 100085 (CN); CHEN, Zhijun, Haidian District, Beijing 100085 (CN)
(74) Representative: Reeve, Nicholas Edward

(57) **Abstract**

Method for region extraction, method for model training, and devices thereof are provided in the disclosure, which belongs to image processing field. The method for region extraction may include: acquiring (201) a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; performing (202) recognition on an image to be recognized, in accordance with the recognition model, to obtain at least one numeral region; and performing (203) region segmentation on the numeral region to obtain at least one single-numeral region.

## Description

### FIELD

The present disclosure generally relates to the field of image processing, and more particularly, to methods for region extraction, methods for model training, and devices thereof.

### BACKGROUND

Numeral region extraction belongs to a technology of extracting a numeral region(s) from an image.

In related art, methods for numeral region extraction usually may only recognize a region of numerals with specific size and specific digits in an image. If the numerals of the image have different font styles or different font sizes, or different digits, then it will be difficult to extract the numeral region from the image effectively.

### SUMMARY OF THE INVENTION

In view of the difficulties in the related art, methods for region extraction, methods for model training, and devices thereof are provided in the disclosure. The illustrated embodiments are explained as below.

According to a first aspect of the present disclosure, there is provided a method for region extraction, including: acquiring a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; performing recognition on an image to be recognized, in accordance with the recognition model, to obtain at least one numeral region; and performing region segmentation on the numeral region to obtain at least one single-numeral region.

Optionally, the recognition may include: extracting a candidate window region from the image to be recognized in accordance with a predetermined sweeping-window strategy with a predefined window; classifying the candidate window region by inputting an image feature of the candidate window region into the recognition model, to obtain a classification result; and recognizing the candidate window region as the numeral region, in case of the classification result being a positive result.

Optionally, there exists at least two numeral regions, and the method may further include: finding n numeral regions each of which has an intersection area with another numeral region within the n numeral regions; and merging the n numeral regions to obtain a merged numeral region.

Optionally, the merging may include: in case of upper edges and lower edges of the n numeral regions being in alignment respectively, determining a leftmost edge from n left edges of the n numeral regions as a merged left edge; determining a rightmost edge from n right edges of the n numeral regions as a merged right edge; and obtaining the merged numeral region based on the upper edge, the lower edge, the merged left edge, and the merged right edge.

Optionally, the segmentation may include: binarizing the numeral region to obtain a binarized numeral region; calculating a histogram for the binarized numeral region in a vertical direction, the histogram including a horizontal coordinate of each column of pixel points and an accumulative value of foreground color pixel points in each column of pixel points; and recognizing n single-numeral regions based on consecutive column sets in the histogram, wherein each of the consecutive column sets is composed of columns in which the accumulative values of foreground color pixel points are larger than a predefined threshold.

According to a second aspect of the present disclosure, there is provided a method for model training, including: acquiring predefined sample images, the predefined sample images including positive sample images and negative sample images, each of the positive sample images having at least one numeral character, each of the negative sample images having no numeral character or incomplete numeral characters only; and training the predefined sample images with a classification algorithm, to obtain a recognition model.

Optionally, the training may include: extracting image features of the positive sample images and the negative sample images; and inputting the image features of the positive sample images and a first label indicating positive results into an initial model, and inputting the image features of the negative sample images and a second label indicating negative results into the initial model, so as to obtain the recognition model, wherein the initial model is constructed by utilizing the classification algorithm.

Optionally, the classification algorithm may include at least one of Adaboost, Support Vector Machine (SVM), Artificial Neural Network, Evolutionary Algorithm, Naive Bayes, Decision Trees, K-Nearest Neighbor.

According to a third aspect of the present disclosure, there is provided a device for region extraction, including: an acquisition module configured to acquire a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; a recognition module configured to perform recognition on an image to be recognized, in accordance with the recognition model, to obtain at least one numeral region; and a segmentation module configured to perform region segmentation on the numeral region to obtain at least one single-numeral region.

Optionally, the recognition module may include: a sweeping-window sub-module configured to extract a candidate window region from the image to be recognized in accordance with a predetermined sweeping-window strategy with a predefined window; a classification sub-module configured to classify the candidate window region by inputting an image feature of the candidate window region into the recognition model to obtain a classification result; and a confirmation sub-module configured to recognize the candidate window region as the numeral region, in case of the classification result being a positive result.

Optionally, there exists at least two numeral regions, and the device may further include: a finding module configured to find n numeral regions each of which has an intersection area with another numeral region within the n numeral regions; and a merging module configured to merge the n numeral regions to obtain a merged numeral region.

Optionally, the merging module may include: a first determination sub-module configured to determine a leftmost edge from n left edges of the n numeral regions as a merged left edge, in case of upper edges and lower edges of the n numeral regions being in alignment respectively; a second determination sub-module configured to determine a rightmost edge from n right edges of the n numeral regions as a merged right edge, in case of upper edges and lower edges of the n numeral regions being in alignment respectively; and a third determination sub-module configured to obtain the merged numeral region based on the upper edge, the lower edge, the merged left edge, and the merged right edge, in case of upper edges and lower edges of the n numeral regions being in alignment respectively.

Optionally, the segmentation module may include: a binarization sub-module configured to binarize the numeral region to obtain a binarized numeral region; a calculation sub-module configured to calculate a histogram for the binarized numeral region in a vertical direction, the histogram including a horizontal coordinate of each column of pixel points and an accumulative value of foreground color pixel points in each column of pixel points; and a numeral recognition sub-module configured to recognize n single-numeral regions based on consecutive column sets in the histogram, wherein each of the consecutive column sets is composed of columns in which the accumulative values of foreground color pixel points are larger than a predefined threshold.

According to a fourth aspect of the present disclosure, there is provided a device for model training, including: a sample acquisition module configured to acquire predefined sample images, the predefined sample images including positive sample images and negative sample images, each of the positive sample images having at least one numeral character, each of the negative sample images having no numeral character or incomplete numeral characters only; and a training module configured to train the predefined sample images with a classification algorithm, to obtain a recognition model.

Optionally, the training module may include: an extraction sub-module configured to extract image features of the positive sample images and the negative sample images; and an inputting sub-module configured to input the image features of the positive sample images and a first label indicating positive results into an initial model, and inputting the image features of the negative sample images and a second label indicating negative results into the initial model, so as to obtain the recognition model, wherein the initial model is constructed by utilizing the classification algorithm.

Optionally, the classification algorithm may include at least one of Adaboost, Support Vector Machine (SVM), Artificial Neural Network, Evolutionary Algorithm, Naive Bayes, Decision Trees, K-Nearest Neighbor.

According to a fifth aspect of the present disclosure, there is provided a device for region extraction, including: a processor; and a memory for storing instructions executable by the processor, wherein the processor is configured to: acquire a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; perform recognition on an image to be recognized, in accordance with the recognition model, to obtain at least one numeral region; and perform region segmentation on the numeral region to obtain at least one single-numeral region.

According to a sixth aspect of the present disclosure, there is provided a device for model training, including: a processor; and a memory for storing instructions executable by the processor, wherein the processor is configured to: acquire predefined sample images, the predefined sample images including positive sample images and negative sample images, each of the positive sample images having at least one numeral character, each of the negative sample images having no numeral character or incomplete numeral characters only; and train the predefined sample images with a classification algorithm, to obtain a recognition model.

Embodiments of the disclosure may provide the following beneficial effects. With the steps of acquiring a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; performing recognition on an image to be recognized, in accordance with the recognition model, to obtain at least one numeral region; and performing region segmentation on the numeral region to obtain at least one single-numeral region, such a problem is solved that: in current approaches for numeral region extraction, both size and digit number of a numeral is restricted and thus numerals with different font sizes or different digits cannot be exactly extracted. As a result, technical effects of accurately locating and then performing segmentation and extraction on numerals having different font styles, different font sizes, or different digits are achieved.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for model training according to an exemplary embodiment;
Fig. 2 is a flow diagram illustrating a method for region extraction according to an exemplary embodiment;
Fig. 3A is a flow diagram illustrating a method for model training according to another exemplary embodiment;
Fig. 3B is a schematic diagram illustrating an original sample image according to an exemplary embodiment;
Fig. 3C is a schematic diagram illustrating a positive sample image according to an exemplary embodiment;
Fig. 3D is a schematic diagram illustrating a negative sample image according to an exemplary embodiment;
Fig. 4 is a flow diagram illustrating a method for region extraction according to another exemplary embodiment;
Fig. 5 is a flow diagram illustrating a method for region extraction according to another exemplary embodiment;
Fig. 6A is a flow diagram illustrating a method for region extraction according to another exemplary embodiment;
Fig. 6B is a schematic diagram illustrating a left edge of a region according to an exemplary embodiment;
Fig. 6C is a schematic diagram illustrating a right edge of a region according to an exemplary embodiment;
Fig. 6D is a schematic diagram illustrating an example region extraction according to an exemplary embodiment;
Fig. 7A is a flow diagram illustrating a method for region extraction according to another exemplary embodiment;
Fig. 7B is a schematic diagram illustrating a region binarization according to an exemplary embodiment;
Fig. 7C is a schematic diagram illustrating an example histogram of a binarized region according to an exemplary embodiment;
Fig. 7D is a schematic diagram illustrating consecutive column sets of a binarized region according to an exemplary embodiment;
Fig. 8 is a block diagram illustrating a device for region extraction according to an exemplary embodiment;
Fig. 9 is a block diagram illustrating a device for region extraction according to another exemplary embodiment;
Fig. 10 is a block diagram illustrating a device for region extraction according to another exemplary embodiment;
Fig. 11 is a block diagram illustrating a device for region extraction according to another exemplary embodiment;
Fig. 12 is a block diagram illustrating a device for model training according to an exemplary embodiment;
Fig. 13 is a block diagram illustrating a device for model training according to another exemplary embodiment; and
Fig. 14 is a block diagram illustrating a device for region extraction according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of the exemplary embodiments do not represent all implementations consistent with the invention. Instead, they are merely examples of devices and methods consistent with aspects related to the invention as defined by the appended claims.

Embodiments of the present disclosure involve two procedures: a first procedure of training a recognition model and a second procedure of performing recognition through the recognition model. Both of these two procedures may be implemented by the same terminal. Alternatively, a first terminal may be utilized to perform the first procedure, and a second terminal may be utilized to perform the second procedure. The present disclosure is not limited in this respect. The first and second procedures would be separately illustrated in different embodiments as described below.

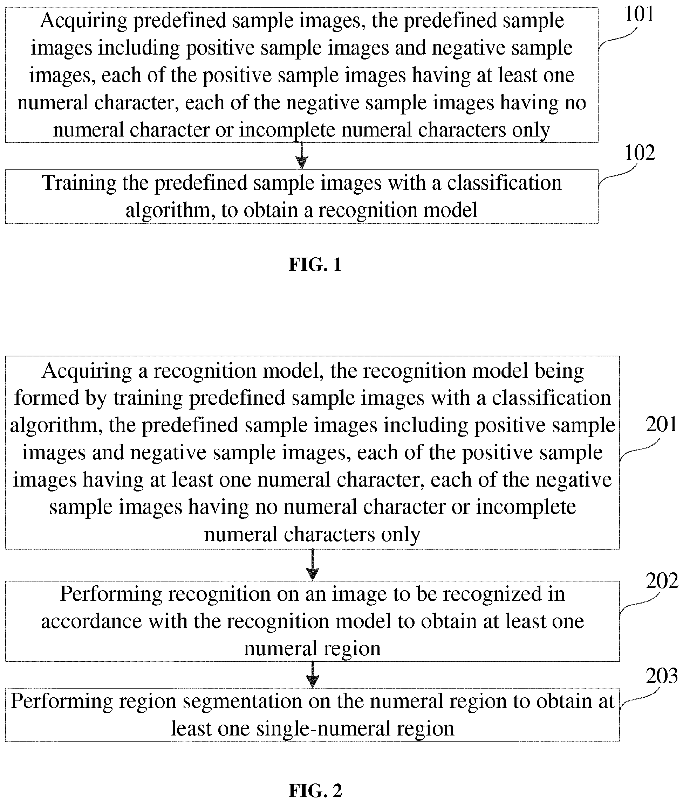

Fig. 1 is a flow diagram illustrating a method for model training according to an exemplary embodiment. This model training method may include the following steps.

In step 101, predefined sample images are acquired. The predefined sample images include positive sample images and negative sample images. Each of the positive sample images has at least one numeral character, and each of the negative sample images has no numeral character or incomplete numeral characters only.

In step 102, the predefined sample images are trained with a classification algorithm, so as to obtain a recognition model.

In general, according to the method for model training provided by the embodiments of the disclosure, by acquiring predefined sample images, the predefined sample images including positive sample images and negative sample images, each of the positive sample images having at least one numeral character, each of the negative sample images having no numeral character or incomplete numeral characters only, and training the predefined sample images with a classification algorithm, to obtain a recognition model, such a problem is solved that: in current approaches for numeral region extraction, both size and digit number of a numeral is restricted and thus numerals with different font sizes or different digits cannot be exactly extracted. As a result, a benefit is achieved that the recognition model obtained through this training process has an effect of accurately locating positions of numerals having different font styles, different font sizes, or different digits.

Fig. 2 is a flow diagram illustrating a method for region extraction according to an exemplary embodiment. This region extraction method may include the following steps.

In step 201, a recognition model is acquired. The recognition model may be formed by training predefined sample images with a classification algorithm. The predefined sample images include positive sample images and negative sample images. Each of the positive sample images has at least one numeral character, and each of the negative sample images has no numeral character or incomplete numeral characters only. The recognition model may be formed at a central server and acquired by a terminal device. In this case, the training of the recognition model using the predefined sample images and the classification algorithm takes place at the server. The terminal device may request the recognition model from the server, or the server may push the recognition model to the terminal device. The server may send updated recognition models to the terminal device when updates are available, for example at periodic intervals. Alternatively, the recognition model may be formed at the terminal device and the training of the recognition model using the predefined sample images and the classification algorithm may take place at the terminal device.

In step 202, a recognition process is performed on an image to be recognized, in accordance with the recognition model, to obtain at least one numeral region.

In step 203, region segmentation process is performed on the numeral region to obtain at least one single-numeral region.

In general, according to the method for region extraction provided in this embodiment, by acquiring a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; performing recognition on an image to be recognized, in accordance with the recognition model, to obtain at least one numeral region; and performing region segmentation on the numeral region to obtain at least one single-numeral region, such a problem is solved that: in current approaches for numeral region extraction, both size and digit number of a numeral is restricted and thus numerals with different font sizes or different digits cannot be exactly extracted. As a result, technical effects of accurately locating and then segmenting and extracting numerals having different font styles, different font sizes, or different digits are achieved by using the recognition model.

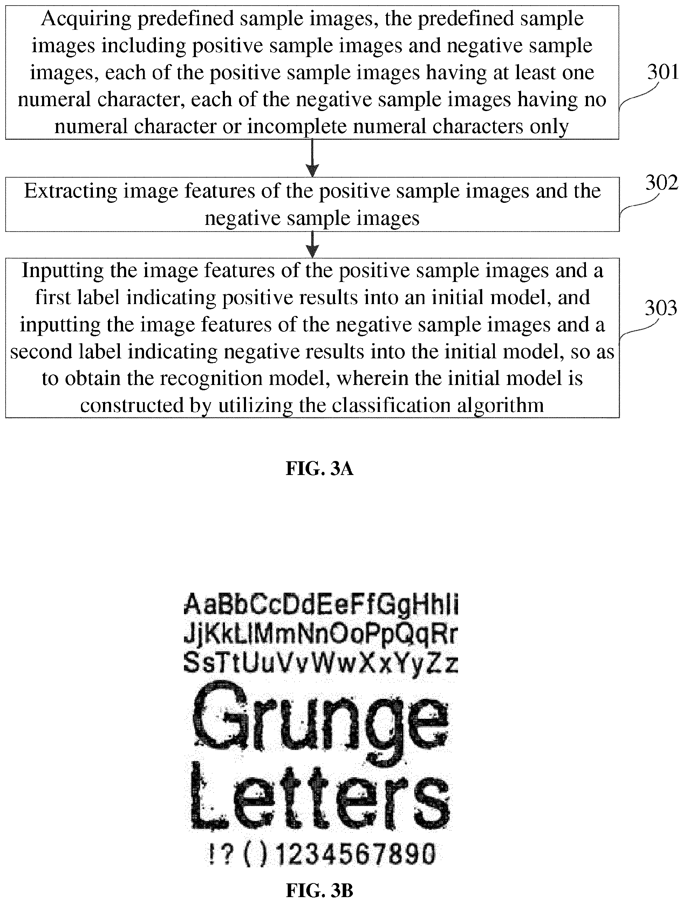

Fig. 3A is a flow diagram illustrating a method for model training according to another exemplary embodiment. This model training method may include the following steps.

In step 301, predefined sample images are acquired. The predefined sample images include positive sample images and negative sample images. Each of the positive sample images has at least one numeral character, and each of the negative sample images has no numeral character or incomplete numeral characters only.

The predefined sample images are selected from an image library or obtained from directly taken images. The predefined sample images refer to images used by the recognition model, which may include two kinds of images: positive sample images and negative sample images. A positive sample image may be a numeral image containing a single numeral character, or may also be another numeral image containing a single row of any number of numerals. The numerals in the positive sample images are not limited to specific font sizes, font styles, or number of digits. Further, the positive sample images may include any number of numeral images. A negative sample image may be an image containing zero numeral character, or may also be another image containing incomplete numeral characters.

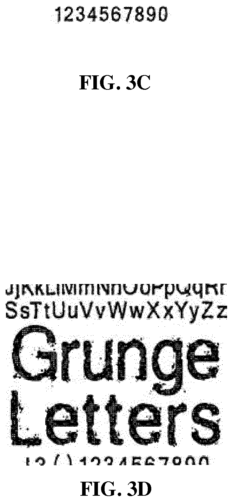

Alternatively or additionally, the positive sample image may be an image formed by one or more numeral regions, all of which are extracted from a same image. Similarly, the negative sample image may be an image formed by confusable regions adjacent to numeral regions in a same image. Alternatively, the negative sample image may be an image containing only partial numerals extracted from the same image, or another image formed by another region extracted from the same image. For illustrative purpose only, Fig. 3B shows an original sample image; Fig. 3C shows a positive sample image extracted from the original sample image of Fig. 3B; and Fig. 3D shows a negative sample image extracted from the original sample image of Fig. 3B.

In step 302, image features of the positive sample images and the negative sample images are extracted.

After the positive sample images and the negative sample images are acquired, a process of feature extraction has been performed for the positive sample images and the negative sample images respectively, so as to obtain the image features of the positive sample images and the negative sample images.

In step 303, the image features of the positive sample images and a first label indicating positive results are inputted into an initial model, which is constructed by utilizing the classification algorithm. The image features of the negative sample images and a second label indicating negative results are also inputted into the initial model. As a result, the recognition model is obtained.

The obtained image features of the positive sample images may be inputted into the initial model constructed by utilizing the classification algorithm. Meanwhile, the first label indicating positive results corresponding to the positive sample images may also be inputted into the initial model. For instance, the first label indicating positive results may be set to 1.

The obtained image features of the negative sample images may be inputted into the initial model constructed by utilizing the classification algorithm. Meanwhile, the second label indicating negative results corresponding to the negative sample images may also be inputted into the initial model. For instance, the second label indicating negative results may be set to -1.

In an embodiment, the classification algorithm may include at least one of Adaboost, Support Vector Machine (SVM), Artificial Neural Network, Evolutionary Algorithm, Naive Bayes, Decision Trees, K-Nearest Neighbor (KNN).

In an exemplary implementation, an original positive sample image may include 256x256 pixels. Through the extraction of Haar features from the original positive sample image, each positive sample image may have a Haar feature, and then image features extracted from all the positive sample images may be inputted into the initial model constructed by utilizing the classification algorithm. Similarly, image features extracted from negative sample images may be inputted into the initial model constructed by utilizing the classification algorithm. After training, the recognition model may be acquired.

In general, according to the model training method provided in the embodiments of the disclosure, by acquiring predefined sample images, the predefined sample images including positive sample images and negative sample images, each of the positive sample images having at least one numeral character, each of the negative sample images having no numeral character or incomplete numeral characters only; extracting image features of the positive sample images and the negative sample images; and inputting the image features of the positive sample images and a first label indicating positive results into an initial model, and inputting the image features of the negative sample images and a second label indicating negative results into the initial model, so as to obtain the recognition model, the initial model being constructed by utilizing the classification algorithm. Such a problem is solved that: in current approaches for numeral region extraction, both size and digit number of a numeral is restricted and thus numerals with different font sizes or different digits cannot be exactly extracted. As a result, a technical effect of accurately locating numerals having different font styles, different font sizes, or different digits is achieved by using the recognition model.

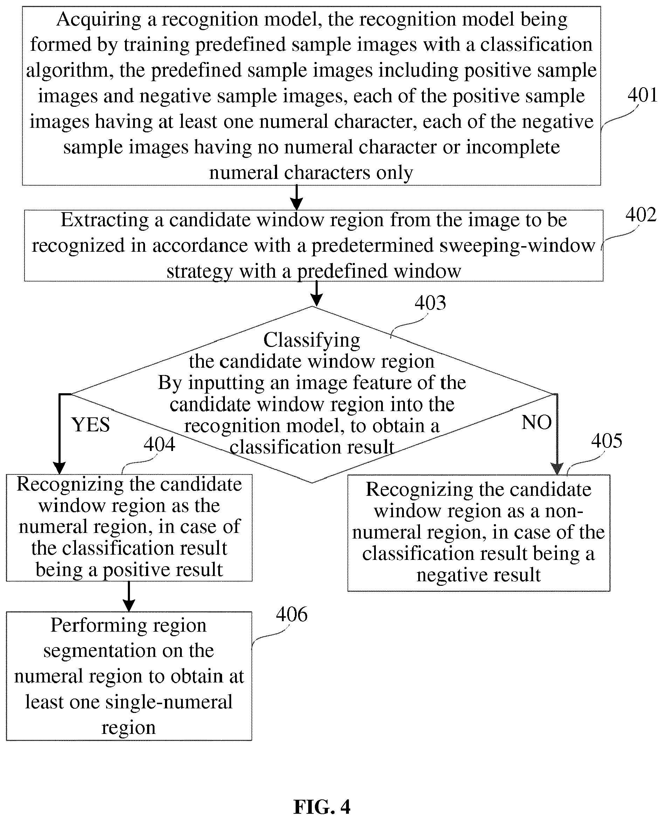

Fig. 4 is a flow diagram illustrating a method for region extraction according to another exemplary embodiment. This region extraction method may include following steps.

In step 401, a recognition model is acquired. The recognition model may be formed by training predefined sample images with a classification algorithm. The predefined sample images include positive sample images and negative sample images. Each of the positive sample images has at least one numeral character, and each of the negative sample images has no numeral character or incomplete numeral characters only.

In an exemplary implementation, the acquired recognition model is a model obtained by training an initial model constructed by using a classification algorithm with the positive sample images and negative sample images, as shown in the embodiments of Figs. 3A to 3D.

In step 402, a candidate window region is extracted from the image to be recognized in accordance with a predetermined sweeping-window strategy with a predefined window.

After the recognition model is acquired, a predefined window of a fixed size is set. Subsequently, by using the predefined window, a predetermined sweeping-window strategy is performed for the image to be recognized. After the window sweeping, a candidate window region may be extracted from the image to be recognized.

Alternatively or additionally, the predefined sweeping-window strategy may include: progressively sweeping the window for the image to be recognized in an order of from left to right and top to bottom.

Alternatively or additionally, the predefined sweeping-window strategy may include: performing multiple sweeping-window processes for the same image with predefined windows of different sizes.

Alternatively or additionally, the predefined sweeping-window strategy may include: when the image to be recognized is swept with a predefined window of a fixed size, the predefined window moves its position as the window sweeping progresses, and an overlapping area exists during two adjacent movements of the predefined window.

In an exemplary implementation, the predefined window has a size of 16x16 pixels, and the image to be recognized has a size of 256x256 pixels. In this implementation, the window sweeping is started from a top left corner of the image to be recognized, with the predefined window of 16x16 pixels. A predetermined sweeping-window strategy is performed for every pixel in the image to be recognized in an order of from top to bottom and left to right. During the movement of the predefined window from left to right, an overlapping area exists during two adjacent movements of the predefined window.

In step 403, the candidate window region is classified by inputting an image feature of the candidate window region into the recognition model, to obtain a classification result.

Image feature extraction is performed for the candidate window region obtained in step 402. The extraction is similar to the image feature extraction for the recognition model in the embodiment shown in Fig. 3A. The candidate window region is classified by inputting an extracted image feature of the candidate window region into the recognition model acquired in the embodiment shown in Fig. 3A. In an implementation, the recognition model would match an image feature extracted from a candidate window region to templates of the recognition model and detect whether this candidate window region is a numeral region. Through the detection of the image feature in the candidate window region by the recognition model, numeral regions are recognized among the candidate window regions.

In step 404, a candidate window region is recognized as the numeral region, if the corresponding classification result is a positive result.

In this step, if the classification result is obtained as a positive result, after the classification of the recognition model, then this candidate window region is recognized as the numeral region. The positive result indicates that this candidate window region belongs to a model trained through a positive sample image.

Because the first label represents the positive result in the recognition model, the candidate window region may be marked with the first label after the classification, if the classification result of this candidate window region is a positive result.

In step 405, a candidate window region is recognized as a non-numeral region, if the corresponding classification result is a negative result.

In this step, if the classification result is obtained as a negative result, after the classification of the recognition model, then this candidate window region is recognized as the non-numeral region. The negative result indicates that this candidate window region belongs to a model trained through a negative sample image.

Because the second label represents the negative result in the recognition model, the candidate window region may be marked with the second label after the classification, if the classification result of this candidate window region is a negative result.

In step 406, region segmentation process is performed on the numeral region to obtain at least one single-numeral region.

The region segmentation process may be performed on a candidate window region which has a positive result after the classification, to obtain a single-numeral region within the candidate window region. The candidate window region includes at least one single-numeral region.

In general, according to the method for region extraction provided in this embodiment, by acquiring a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; extracting a candidate window region from the image to be recognized in accordance with a predetermined sweeping-window strategy with a predefined window; classifying the candidate window region by inputting an image feature of the candidate window region into the recognition model, to obtain a classification result; recognizing the candidate window region as the numeral region, in case of the classification result being a positive result; and performing region segmentation on the numeral region to obtain at least one single-numeral region, such a problem is solved that: in current approaches for numeral region extraction, both size and digit number of a numeral is restricted and thus numerals with different font sizes or different digits cannot be exactly extracted. As a result, technical effects of accurately locating and then segmenting and extracting numerals having different font styles, different font sizes, or different digits are achieved by using the recognition model.

When there exists at least two numeral regions in the recognition of the candidate window regions, the at least two numeral regions may have an intersection area between them. Thus, these multiple numeral regions having an intersection area need to be merged.

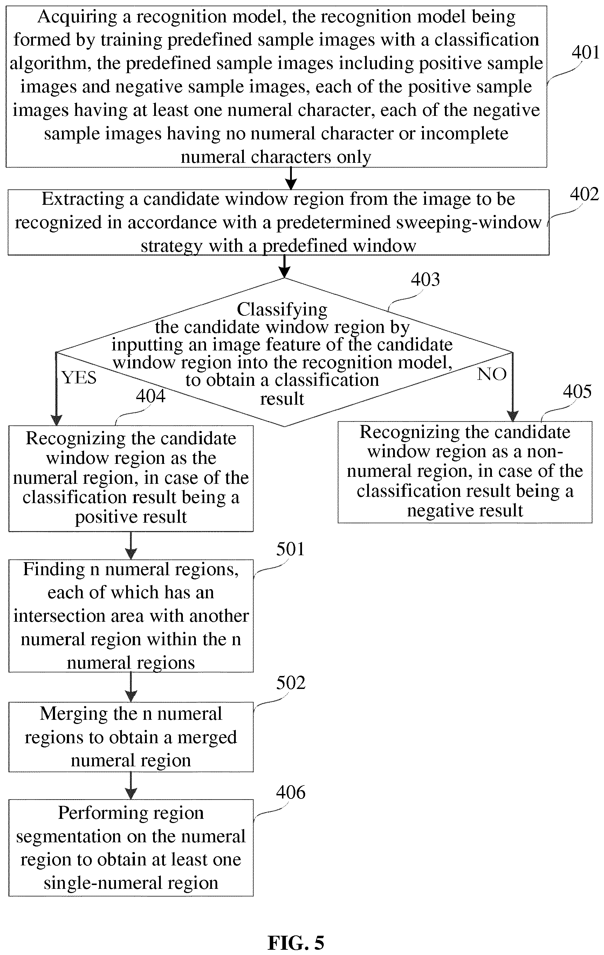

In an alternative embodiment of Fig. 5, there exists at least two numeral regions, and the method may further include the following steps after step 405 of Fig. 4.

In step 501, *n* numeral regions are found, each of which has an intersection area with another numeral region within the n numeral regions.

When there exist at least two numeral regions, n numeral regions may be searched out from all the numeral regions. Each of these n numeral regions has an intersection area with another numeral region within the n numeral regions.

For instance, by detecting number of regions overlapping another numeral region among all the numeral regions, a numeral region having an intersection area with another numeral region is found. Alternatively, a numeral region having an intersection area with another numeral region is found through inter-inclusion relationships of overlapping areas within the numeral regions.

In step 502, the *n* numeral regions are merged to obtain a merged numeral region.

After finding n numeral regions, each of which has an intersection area with another numeral region within the *n* numeral regions, these *n* numeral regions may be merged to determine a final numeral region.

In general, according to the embodiment, by finding *n* numeral regions each of which has an intersection area with another numeral region and merging the *n* numeral regions to obtain a merged numeral region, the final determination of numeral region is more accurate and the recognition and extraction of the numeral region may be advantageously improved.

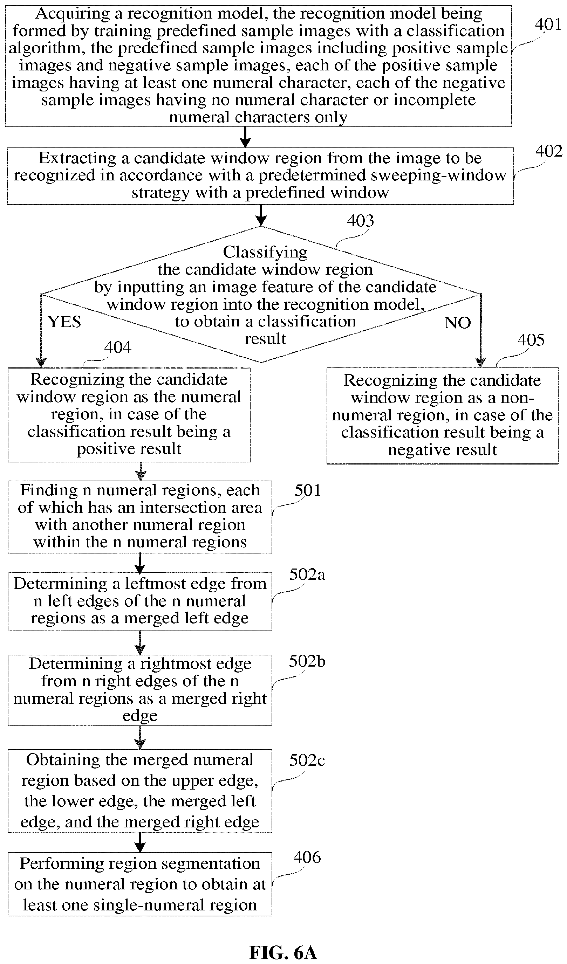

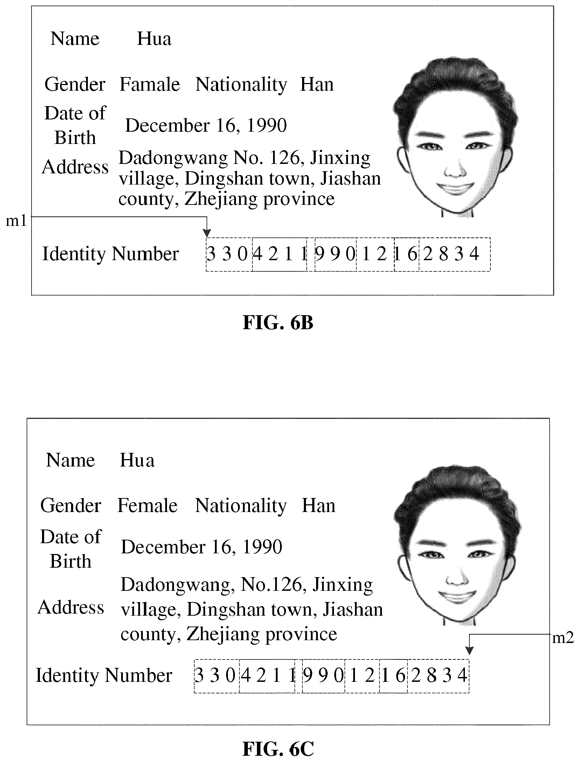

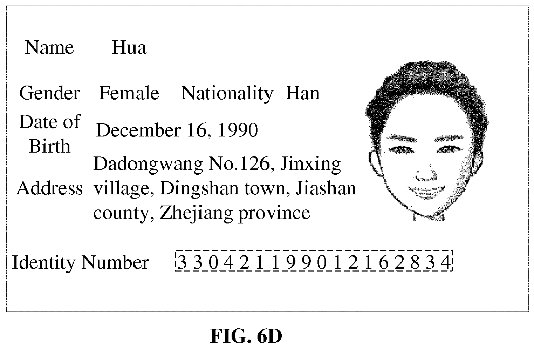

In an alternative embodiment, step 502 of Fig. 5 may be substituted with the following steps 502a to 502c, as shown in Fig. 6.

If the upper edges and lower edges of these *n* numeral regions are in alignment respectively, steps 502a to 502c may be performed as follows.

In step 502a, a leftmost edge from *n* left edges of the *n* numeral regions is determined as a merged left edge.

When *these n* numeral regions are arranged in a *row, n* left edges of *the n* numeral regions may be acquired, and thus the leftmost edge *from n* left edges of *the n* numeral regions is determined as the merged left edge m1, as shown in Fig. 6B.

In step 502b, a rightmost edge *from n* right edges of *the n* numeral regions is determined as a merged right edge.

When these *n* numeral regions are arranged in a *row, n* right edges of the *n* numeral regions may be acquired, and thus the rightmost edge *from n* right edges of *the n* numeral regions is determined as the merged right edge m2, as shown in Fig. 6C.

In step 502c, the merged numeral region is obtained based on the upper edge, the lower edge, the merged left edge, and the merged right edge.

As shown in Fig. 6D, the final numeral region after merging is obtained based on the upper edge, the lower edge, the merged left edge, and the merged right edge determined by the above steps.

In general, according to the embodiment, by determining a leftmost edge from n left edges of *the n* numeral regions as a merged left edge, determining a rightmost edge from *n* right edges of the n numeral regions as a merged right edge, and obtaining the merged numeral region based on the upper edge, the lower edge, the merged left edge, and the merged right edge, the merged numeral region is more accurate, and the recognition and extraction of the numeral region may be advantageously improved.

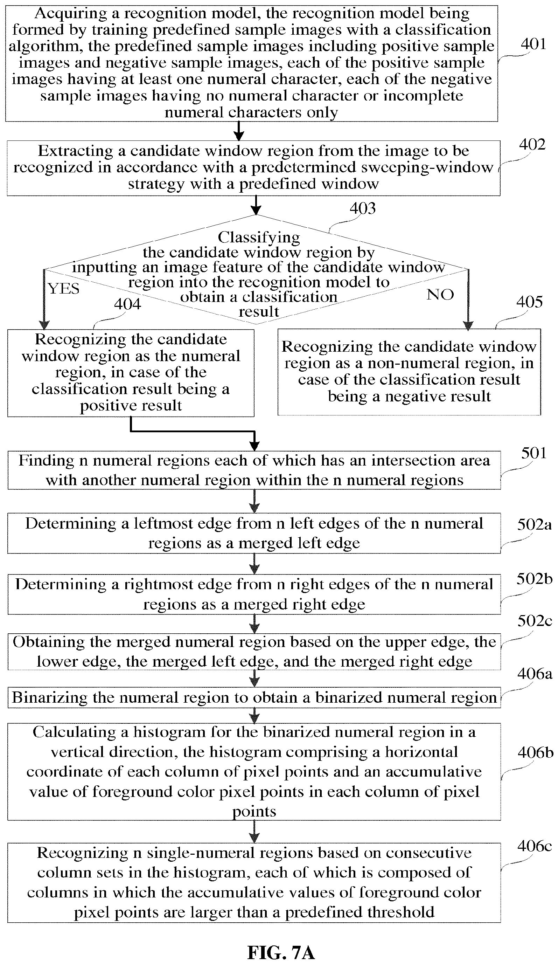

In an alternative embodiment, step 406 of Fig. 6A may be substituted with the following steps 406a to 406c, as shown in Fig. 7A.

In step 406a, the numeral region is binarized to obtain a binarized numeral region.

Alternatively or additionally, the preprocessing of the numeral region is performed based on the merged numeral region at step 502c. In an exemplary implementation, the preprocessing may include operations such as denoising, filtering, edge extraction, etc. Subsequently, the preprocessed numeral region may be binarized.

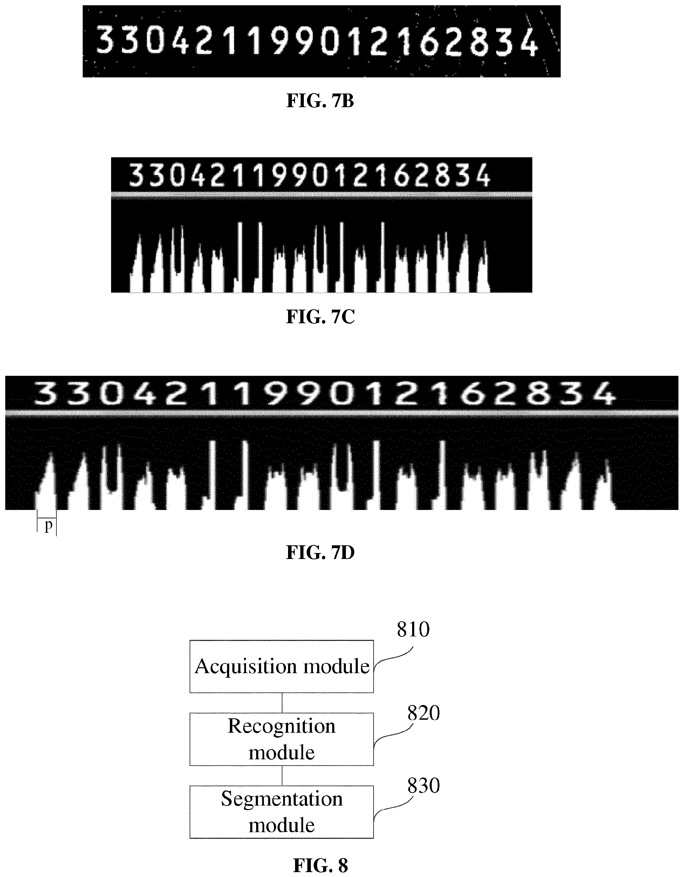

The binarization refers to procedures of comparing gray-scale values of pixels within the numeral region with a predefined gray-scale threshold; dividing the pixels into two parts: a group of pixels having gray-scale values larger than the predefined gray-scale threshold and another group of pixels having gray-scale values smaller than the predefined gray-scale threshold; and presenting two different colors (black and white) in the numeral region for these two group of pixels respectively, so as to obtain a binarized numeral region, which is shown in Fig. 7B. As shown, pixels located at foreground of the numeral region are called foreground color pixel points, i.e., white color pixel points in Fig. 7B; and pixels located at background of the numeral region are called background color pixel points, i.e., black color pixel points in Fig. 7B.

In step 406b, a histogram is calculated for the binarized numeral region in a vertical direction. The histogram may include a horizontal coordinate of each column of pixel points and an accumulative value of foreground color pixel points in each column of pixel points.

The histogram is calculated for the binarized numeral region in a vertical direction. In the horizontal direction, this histogram indicates a horizontal coordinate of each column of pixel points. In the vertical direction, this histogram indicates an accumulative value of a number of foreground color pixel points in each column of pixel points, as shown in Fig. 7C.

In step 406c, n single-numeral regions are recognized based on consecutive column sets in the histogram, each of the consecutive column sets being composed of columns in which the accumulative values of foreground color pixel points are larger than a predefined threshold.

In the histogram, an accumulative value of foreground color pixel points in each column of pixel points may be acquired. Through comparing the accumulative value with the predefined threshold, a set of consecutive columns in which the accumulative values of foreground color pixel points are larger than a predefined threshold may be determined as the column where a single-numeral region is located.

The consecutive column set refers to a set consisted of p consecutive columns in which the accumulative values of foreground color pixel points are larger than the predefined threshold, as shown in Fig. 7D. This consecutive column set is called "p", i.e., a consecutive white area formed in the histogram. For the p columns of pixel points in this diagram, all the accumulative values of foreground color pixel points are larger than the predefined threshold. These p columns of pixel points correspond to a numeral region of "3" in this numeral image.

Each consecutive column set is recognized as a region of one numeral, and thus n consecutive column sets are recognized as n single-numeral regions.

In general, according to this embodiment, by binarizing the numeral region, calculating a histogram for the binarized numeral region in a vertical direction, and recognizing each single-numeral region corresponding to each numeral, the accuracy of recognizing a single-numeral region in the numeral region may be improved.

The following embodiments are devices that may be used to perform the methods disclosed in the above embodiments of the disclosure. The methods above may be referred to for any undisclosed details of the devices of the following embodiments.

Fig. 8 is a block diagram illustrating a device for region extraction according to an exemplary embodiment. As shown in Fig. 8, this region extraction device may include, but is not limited to: an acquisition module 810 configured to acquire a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; a recognition module 820 configured to perform recognition on an image to be recognized, in accordance with the recognition model, to obtain at least one numeral region; and a segmentation module 830 configured to perform region segmentation on the numeral region to obtain at least one single-numeral region.

In general, according to the device for region extraction provided in this embodiment, by acquiring a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; performing recognition on an image to be recognized, in accordance with the recognition model, to obtain at least one numeral region; and performing region segmentation on the numeral region to obtain at least one single-numeral region, such a problem is solved that: in current approaches for numeral region extraction, both size and digit number of a numeral is restricted and thus numerals with different font sizes or different digits cannot be exactly extracted. As a result, technical effects of accurately locating and then segmenting and extracting numerals having different font styles, different font sizes, or different digits are achieved by using the recognition model.

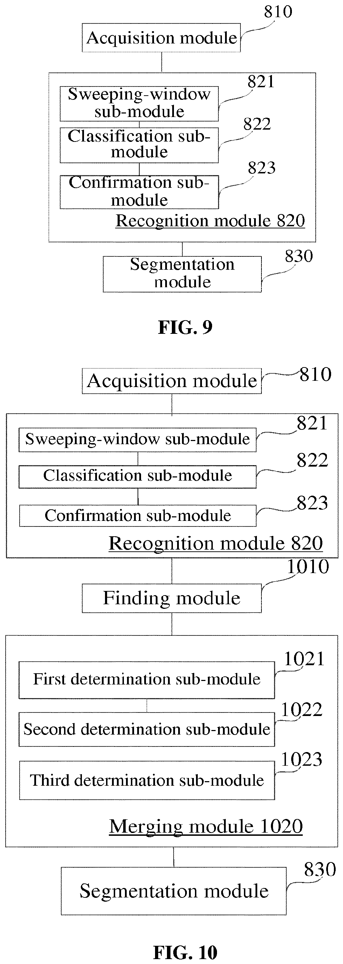

Fig. 9 is a block diagram illustrating a device for region extraction according to another exemplary embodiment. As shown in Fig. 9, this region extraction device may include, but is not limited to: an acquisition module 810, a recognition module 820, and a segmentation module 830.

The acquisition module 810 is configured to acquire a recognition model. The recognition model may be formed by training predefined sample images with a classification algorithm. The predefined sample images include positive sample images and negative sample images. Each of the positive sample images has at least one numeral character, and each of the negative sample images has no numeral character or incomplete numeral characters only.

The recognition model is acquired by the acquisition module 810. In an embodiment, the recognition model may be a model obtained by training an initial model constructed by using a classification algorithm with the positive sample images and negative sample images.

The recognition module 820 is configured to perform recognition on an image to be recognized, in accordance with the recognition model, to obtain at least one numeral region.

In this embodiment, the recognition module 820 may include the following sub-modules.

A sweeping-window sub-module 821 is configured to extract a candidate window region from the image to be recognized in accordance with a predetermined sweeping-window strategy with a predefined window.

After the recognition model is acquired by the acquisition module 810, a predefined window of a fixed size is set by the sweeping-window sub-module 821. Subsequently, by using the predefined window, a predetermined sweeping-window strategy is performed for the image to be recognized. After the window sweeping, multiple candidate window regions may be extracted from the image to be recognized.

Alternatively or additionally, the predefined sweeping-window strategy may include: progressively sweeping window for the image to be recognized in an order of from left to right and top to bottom.

Alternatively or additionally, the predefined sweeping-window strategy may include: performing multiple sweeping-window processes for the same image with predefined windows of different sizes.

Alternatively or additionally, the predefined sweeping-window strategy may include: when the image to be recognized is swept with a predefined window of a fixed size, the predefined window moves its position as the window sweeping progresses, and an overlapping area exists during two adjacent movements of the predefined window.

A classification sub-module 822 is configured to classify the candidate window region by inputting an image feature of the candidate window region into the recognition model to obtain a classification result.

Image feature extraction is performed for the candidate window region obtained in the sweeping-window sub-module 821. The candidate window region is classified by inputting an extracted image feature of the candidate window region into the recognition model acquired in the acquisition module 810. In an implementation, the recognition model would match an image feature extracted from a candidate window region to templates of the recognition model and detect whether this candidate window region is a numeral region. Through the detection of the image feature in the candidate window region by the recognition model, the classification sub-module may be configured to recognize numeral regions among the candidate window regions.

A confirmation sub-module 823 is configured to recognize a candidate window region as the numeral region, in case of a corresponding classification result being a positive result.

If the classification result is obtained as a positive result, after the classification of the recognition model, then the confirmation sub-module 823 may recognize this candidate window region as the numeral region. The positive result indicates that this candidate window region belongs to a model trained through a positive sample image.

The confirmation sub-module 823 is further configured to recognize a candidate window region as a non-numeral region, if the corresponding classification result is a negative result.

If the classification result is obtained as a negative result, after the classification of the recognition model, then the confirmation sub-module 823 may recognize this candidate window region as the non-numeral region. The negative result indicates that this candidate window region belongs to a model trained through a negative sample image.

The segmentation module 830 is configured to perform region segmentation on the numeral region to obtain at least one single-numeral region.

The region segmentation process may be performed by the segmentation module 830 on a candidate window region obtained through the confirmation sub-module 823, to obtain a single-numeral region within the candidate window region. The candidate window region includes at least one single-numeral region.

In general, according to the device for region extraction provided in the embodiments, by acquiring a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; extracting a candidate window region from the image to be recognized in accordance with a predetermined sweeping-window strategy with a predefined window; classifying the candidate window region by inputting an image feature of the candidate window region into the recognition model, to obtain a classification result; recognizing a candidate window region as the numeral region, in case of a corresponding classification result being a positive result; and performing region segmentation on the numeral region to obtain at least one single-numeral region, such a problem is solved that: in current approaches for numeral region extraction, both size and digit number of a numeral is restricted and thus numerals with different font sizes or different digits cannot be exactly extracted. As a result, technical effects of accurately locating and then segmenting and extracting numerals having different font styles, different font sizes, or different digits are achieved by using the recognition model.

In an alternative embodiment, the device of Fig. 9 may also include the following modules, as shown in Fig. 10.

A finding module 1010 is configured to find n numeral regions each of which has an intersection area with another numeral region.

When there exists at least two numeral regions, the finding module 1010 may be configured to search *out n* numeral regions from all the numeral regions. Each of *these n* numeral regions has an intersection area with another numeral region within the n numeral regions.

A merging module 1020 is configured to merge the n numeral regions to obtain a merged numeral region

After finding n numeral regions, each of which has an intersection area with another numeral region within the n numeral regions, the merging module 1020 may be configured to merge these *n* numeral regions to determine a final numeral region.

As an exemplary implementation, the merging module 1020 may include the following sub-modules.

It is assumed that upper edges and lower edges of these n numeral regions are in alignment respectively.

Accordingly, the first determination sub-module 1021 may be configured to determine a leftmost edge *from n* left edges of the *n* numeral regions as a merged left edge, in case of upper edges and lower edges of the n numeral regions being in alignment respectively.

When *these n* numeral regions are arranged in a row, *n* left edges of the *n* numeral regions may be acquired, and thus the first determination sub-module 1021 may be configured to determine the leftmost edge from *n* left edges of *the n* numeral regions as the merged left edge.

A second determination sub-module 1022 may be configured to determine a rightmost edge from *n* right edges of the *n* numeral regions as a merged right edge, in case of upper edges and lower edges of the *n* numeral regions being in alignment respectively.

When these *n* numeral regions are arranged in a row, *n* right edges of the *n* numeral regions may be acquired, and thus the second determination sub-module 1022 may be configured to determine the rightmost edge from *n* right edges of the *n* numeral regions as the merged right edge.

A third determination sub-module 1023 may be configured to obtain the merged numeral region based on the upper edge, the lower edge, the merged left edge, and the merged right edge, in case of upper edges and lower edges of the n numeral regions being in alignment respectively.

The third determination sub-module 1023 may obtain the final numeral region after merging based on the upper edge, the lower edge, the merged left edge, and the merged right edge determined by the first determination sub-module 1021 and the second determination sub-module 1022.

In general, according to the embodiment, by determining a leftmost edge from *n* left edges of *the n* numeral regions as a merged left edge, determining a rightmost edge from *n* right edges of the *n* numeral regions as a merged right edge, and obtaining the merged numeral region based on the upper edge, the lower edge, the merged left edge, and the merged right edge, the merged numeral region is more accurate, and the recognition and extraction of the numeral region may be advantageously improved.

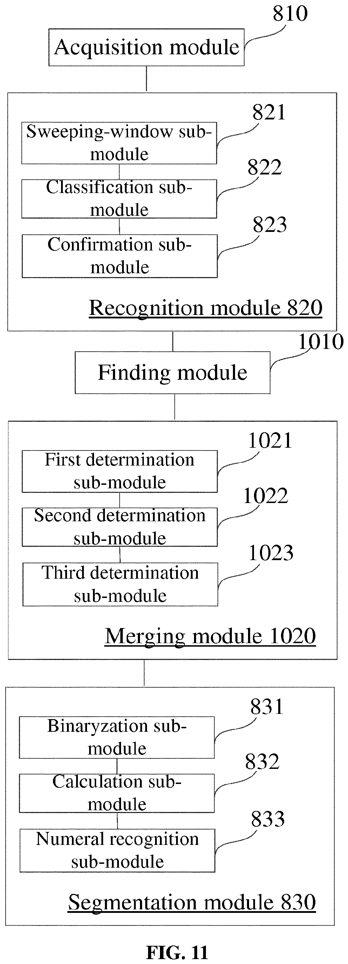

In an alternative embodiment, the segmentation module 830 of Fig. 8 may also include the following sub-modules, as shown in Fig. 11.

A binarization sub-module 831 is configured to binarize the numeral region to obtain a binarized numeral region.

Alternatively or additionally, the preprocessing of the numeral region is performed by the binarization sub-module 831 based on the numeral region determined by the third determination sub-module 1023. In an exemplary implementation, the preprocessing may include operations such as denoising, filtering, edge extraction, etc. Subsequently, the preprocessed numeral region may be binarized.

The binarization refers to procedures of comparing gray-scale values of pixels within the numeral region with a predefined gray-scale threshold; dividing the pixels into two parts: a group of pixels having gray-scale values larger than the predefined gray-scale threshold and another group of pixels having gray-scale values smaller than the predefined gray-scale threshold; and presenting two different colors (black and white) in the numeral region for these two group of pixels respectively, so as to obtain a binarized numeral region.

A calculation sub-module 832 is configured to calculate a histogram for the binarized numeral region in a vertical direction. The histogram may include a horizontal coordinate of each column of pixel points and an accumulative value of foreground color pixel points in each column of pixel points.

The calculation sub-module 832 may be configured to calculate the histogram for the binarized numeral region in a vertical direction. In the horizontal direction, this histogram indicates a horizontal coordinate of each column of pixel points. In the vertical direction, this histogram indicates an accumulative value of a number of foreground color pixel points in each column of pixel points.

A numeral recognition sub-module 833 is configured to recognize n single-numeral regions in accordance with continuous column sets in the histogram, each of the consecutive column sets being composed of columns in which the accumulative values of foreground color pixel points are larger than a predefined threshold.

In the histogram, an accumulative value of foreground color pixel points in each column of pixel points may be acquired. The numeral recognition sub-module 833 may be configured to determine a set of consecutive columns in which the accumulative values of foreground color pixel points are larger than a predefined threshold as the column where a single-numeral region is located, by comparing the accumulative value with the predefined threshold.

The consecutive column set refers to a set consisted of p consecutive columns in which the accumulative values of foreground color pixel points are larger than the predefined threshold.

Each consecutive column set is recognized as a region of one numeral, and thus n consecutive column sets are recognized as n single-numeral regions.

In general, according to this embodiment, by binarizing the numeral region, calculating a histogram for the binarized numeral region in a vertical direction, and recognizing each single-numeral region corresponding to each numeral, a method of accurately segmenting and recognizing a single-numeral region in the numeral region is thus provided.

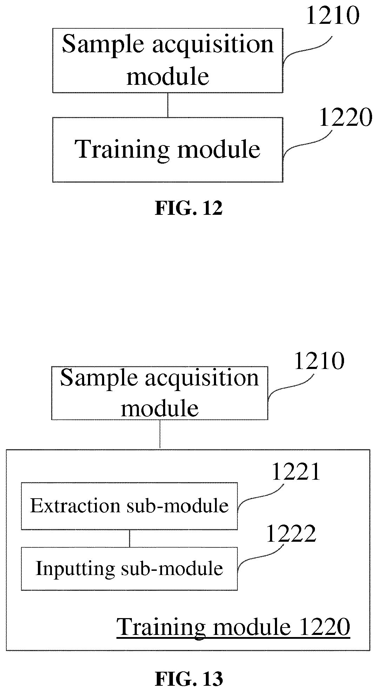

Fig. 12 is a block diagram illustrating a device for model training according to an exemplary embodiment. As shown in Fig. 12, this model training device may include, but is not limited to: a sample acquisition module 1210 configured to acquire predefined sample images, the predefined sample images including positive sample images and negative sample images, each of the positive sample images having at least one numeral character, each of the negative sample images having no numeral character or incomplete numeral characters only; and a training module 1220 configured to train the predefined sample images with a classification algorithm, to obtain a recognition model.

In general, according to the device for model training provided by the embodiments of the disclosure, by acquiring predefined sample images, the predefined sample images including positive sample images and negative sample images, each of the positive sample images having at least one numeral character, each of the negative sample images having no numeral character or incomplete numeral characters only, and training the predefined sample images with a classification algorithm, to obtain a recognition model, such a problem is solved that: in current approaches for numeral region extraction, both size and digit number of a numeral is restricted and thus numerals with different font sizes or different digits cannot be exactly extracted. As a result, a benefit is achieved that the recognition model obtained through this training process has an effect of accurately locating positions of numerals having different font styles, different font sizes, or different digits.

Fig. 13 is a block diagram illustrating a device for model training according to another exemplary embodiment. As shown in Fig. 13, this model training device may include, but is not limited to the following modules.

A sample acquisition module 1210 is configured to acquire predefined sample images. The predefined sample images include positive sample images and negative sample images. Each of the positive sample images has at least one numeral character, and each of the negative sample images has no numeral character or incomplete numeral characters only.

The sample acquisition module 1210 may select predefined sample images from an image library or obtained from directly taken images. The predefined sample images refer to images used by the recognition model, which may include two kinds of images: positive sample images and negative sample images. A positive sample image may be a numeral image containing a single numeral character, or may also be another numeral image containing a single row of any number of numerals. The numerals in the positive sample images are not limited to specific font sizes, font styles, or number of digits. Further, the positive sample images may include any number of numeral images. A negative sample image may be an image containing zero numeral character, or may also be another image containing incomplete numeral characters.

A training module 1220 is configured to train the predefined sample images with a classification algorithm, to obtain a recognition model.

In an embodiment, the classification algorithm may include at least one of Adaboost, Support Vector Machine (SVM), Artificial Neural Network, Evolutionary Algorithm, Naive Bayes, Decision Trees, K-Nearest Neighbor (KNN).

In this embodiment, the training module 1220 may include the following sub-modules.

An extraction sub-module 1221 is configured to extract image features of the positive sample images and the negative sample images.

After the positive sample images and the negative sample images are acquired by the sample acquisition module 1210, a process of feature extraction has been performed by the extraction sub-module 1221 for the positive sample images and the negative sample images respectively, so as to obtain the image features of the positive sample images and the negative sample images.

An inputting sub-module 1222 is configured to input the image features of the positive sample images and a first label indicating positive results into an initial model, which is constructed by utilizing the classification algorithm, and to input the image features of the negative sample images and a second label indicating negative results into the initial model, so as to obtain the recognition model.

The inputting sub-module 1222 may input the obtained image features of the positive sample images into the initial model constructed by utilizing the classification algorithm. Meanwhile, the first label indicating positive results corresponding to the positive sample images may also be inputted by the inputting sub-module 1222 into the initial model.

The inputting sub-module 1222 may input the obtained image features of the negative sample images into the initial model constructed by utilizing the classification algorithm. Meanwhile, the second label indicating negative results corresponding to the negative sample images may also be inputted by the inputting sub-module 1222 into the initial model.

In an embodiment, the classification algorithm may include at least one of Adaboost, Support Vector Machine (SVM), Artificial Neural Network, Evolutionary Algorithm, Naive Bayes, Decision Trees, K-Nearest Neighbor (KNN).

In general, according to the model training device provided in the embodiments of the disclosure, by acquiring predefined sample images, the predefined sample images including positive sample images and negative sample images, each of the positive sample images having at least one numeral character, each of the negative sample images having no numeral character or incomplete numeral characters only; extracting image features of the positive sample images and the negative sample images; and inputting the image features of the positive sample images and a first label indicating positive results into an initial model, and inputting the image features of the negative sample images and a second label indicating negative results into the initial model, so as to obtain the recognition model, the initial model being constructed by utilizing the classification algorithm. Such a problem is solved that: in current approaches for numeral region extraction, both size and digit number of a numeral is restricted and thus numerals with different font sizes or different digits cannot be exactly extracted. As a result, a technical effect of accurately locating numerals having different font styles, different font sizes, or different digits is achieved by using the recognition model.

A device for region extraction is further provided in the present disclosure. The device may include: a processor; and a memory for storing instructions executable by the processor. In an exemplary implementation, the processor may be configured to: acquire a recognition model, the recognition model being formed by training predefined sample images with a classification algorithm, the predefined sample images including positive sample images and negative sample images, each of the positive sample images having at least one numeral character, each of the negative sample images having no numeral character or incomplete numeral characters only; perform recognition on an image to be recognized, in accordance with the recognition model, to obtain at least one numeral region; and perform region segmentation on the numeral region to obtain at least one single-numeral region.

A device for model training is further provided in the present disclosure. The device may include: a processor; and a memory for storing instructions executable by the processor. In an exemplary implementation, the processor may be configured to: acquire predefined sample images, the predefined sample images including positive sample images and negative sample images, each of the positive sample images having at least one numeral character, each of the negative sample images having no numeral character or incomplete numeral characters only; and train the predefined sample images with a classification algorithm, to obtain a recognition model.

With respect to the devices in the above embodiments, the specific manners for performing operations for individual modules therein have been described in detail in the embodiments regarding the methods for sensitive picture recognition, which will not be elaborated herein.

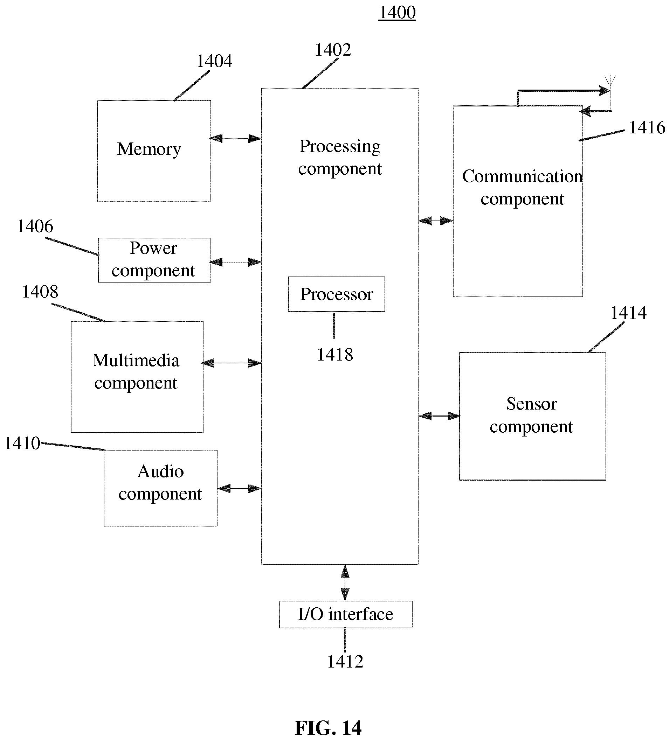

Fig. 14 is a block diagram illustrating a device for performing a region extraction method according to an exemplary embodiment. For example, the device 1400 may be a mobile phone, a computer, a digital broadcast terminal, a messaging device, a gaming console, a tablet, a medical device, exercise equipment, a personal digital assistant, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1418 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1418 in the device 1400, for performing the above-described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the scope of the disclosure is limited only by the appended claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A computer implemented method for region extraction, comprising:
acquiring (201, 401) a recognition model, the recognition model being formed by training a classification algorithm with predefined sample images , the predefined sample images including positive sample images and negative sample images, each of the positive sample images having at least one numeral character, each of the negative sample images having no numeral character or incomplete numeral characters only;
performing (202) recognition on an image to be recognized in accordance with the recognition model to obtain at least one numeral region; and
performing (203, 406) region segmentation on the numeral region to obtain at least one single-numeral region.

2. The method of claim 1, wherein the recognition comprises:
extracting (402) a candidate window region from the image to be recognized in accordance with a predetermined sweeping-window strategy with a predefined window;
classifying (403) the candidate window region by inputting an image feature of the candidate window region into the recognition model, to obtain a classification result; and
recognizing (404) the candidate window region as the numeral region, in case of the classification result being a positive result.

3. The method of claim 2, wherein there exists at least two numeral regions, and the method further comprises:
finding (501) n numeral regions, each of which has an intersection area with another numeral region within the n numeral regions; and
merging (502) the n numeral regions to obtain a merged numeral region.

4. The method of claim 3, wherein the merging comprises:
in case of upper edges and lower edges of the n numeral regions being in alignment respectively,
determining (502a) a leftmost edge from n left edges of the n numeral regions as a merged left edge;
determining (502b) a rightmost edge from n right edges of the n numeral regions as a merged right edge; and
obtaining (502c) the merged numeral region based on the upper edge, the lower edge, the merged left edge, and the merged right edge.

5. The method of any one of claims 1 to 4, wherein the segmentation comprises:
binarizing (406a) the numeral region to obtain a binarized numeral region;
calculating (406b) a histogram for the binarized numeral region in a vertical direction, the histogram comprising a horizontal coordinate of each column of pixel points and an accumulative value of foreground color pixel points in each column of pixel points; and
recognizing (406c) n single-numeral regions based on consecutive column sets in the histogram, wherein each of the consecutive column sets is composed of columns in which the accumulative values of foreground color pixel points are larger than a predefined threshold.

6. A method for model training, comprising:
acquiring (101, 301) predefined sample images, the predefined sample images including positive sample images and negative sample images, each of the positive sample images having at least one numeral character, each of the negative sample images having no numeral character or incomplete numeral characters only; and
training (102) a classification algorithm with the predefined sample images , to obtain a recognition model.

7. The method of claim 6, wherein the training (102) comprises:
extracting (302) image features of the positive sample images and the negative sample images; and
inputting (302) the image features of the positive sample images and a first label indicating positive results into an initial model, and inputting the image features of the negative sample images and a second label indicating negative results into the initial model, so as to obtain the recognition model, wherein the initial model is constructed by utilizing the classification algorithm.

8. The method of claim 6 or 7, wherein the classification algorithm comprises at least one of Adaboost, Support Vector Machine (SVM), Artificial Neural Network, Evolutionary Algorithm, Naive Bayes, Decision Trees, K-Nearest Neighbor.

9. A device for region extraction, comprising:
an acquisition module (810) configured to acquire a recognition model, the recognition model being formed by training a classification algorithm with predefined sample images, the predefined sample images including positive sample images and negative sample images, each of the positive sample images having at least one numeral character, each of the negative sample images having no numeral character or incomplete numeral characters only;
a recognition module (820) configured to perform recognition on an image to be recognized, in accordance with the recognition model, to obtain at least one numeral region; and
a segmentation module (830) configured to perform region segmentation on the numeral region to obtain at least one single-numeral region.

10. The device of claim 9, wherein the recognition module (820) comprises:
a sweeping-window sub-module (821) configured to extract a candidate window region from the image to be recognized in accordance with a predetermined sweeping-window strategy with a predefined window;
a classification sub-module (822) configured to classify the candidate window region by inputting an image feature of the candidate window region into the recognition model to obtain a classification result; and
a confirmation sub-module (823) configured to recognize the candidate window region as the numeral region, in case of the classification result being a positive result.

11. The device of claim 10, wherein there exists at least two numeral regions, and the device further comprises:
a finding module (1010) configured to find n numeral regions each of which has an intersection area with another numeral region within the n numeral regions;
a merging module (1020) configured to merge the n numeral regions to obtain a merged numeral region.

12. The device of any one of claims 9 to 11, wherein the segmentation module (830) comprises:
a binarization sub-module (831) configured to binarize the numeral region to obtain a binarized numeral region;
a calculation sub-module (832) configured to calculate a histogram for the binarized numeral region in a vertical direction, the histogram comprising a horizontal coordinate of each column of pixel points and an accumulative value of foreground color pixel points in each column of pixel points; and
a numeral recognition sub-module (833) configured to recognize n single-numeral regions based on consecutive column sets in the histogram, wherein each of the consecutive column sets is composed of columns in which the accumulative values of foreground color pixel points are larger than a predefined threshold.

13. A device for model training, comprising:
a sample acquisition module (1210) configured to acquire predefined sample images, the predefined sample images including positive sample images and negative sample images, each of the positive sample images having at least one numeral character, each of the negative sample images having no numeral character or incomplete numeral characters only; and
a training module (1220) configured to train a classification algorithm with the predefined sample images , to obtain a recognition model.

14. A device (1400) for region extraction, comprising:
a processor (1418); and
a memory (1404) for storing instructions executable by the processor,
wherein the processor is configured to:
acquire a recognition model, the recognition model being formed by training a classification algorithm with predefined sample images , the predefined sample images including positive sample images and negative sample images, each of the positive sample images having at least one numeral character, each of the negative sample images having no numeral character or incomplete numeral characters only;
perform recognition on an image to be recognized, in accordance with the recognition model, to obtain at least one numeral region; and
perform region segmentation on the numeral region to obtain at least one single-numeral region.

15. A device (1400) for model training, comprising:
a processor (1418); and
a memory (1404) for storing instructions executable by the processor,
wherein the processor is configured to:
acquire predefined sample images, the predefined sample images including positive sample images and negative sample images, each of the positive sample images having at least one numeral character, each of the negative sample images having no numeral character or incomplete numeral characters only; and
train a classification algorithm with the predefined sample images , to obtain a recognition model.
